(19) Europäisches Patentamt
European Patent Office
Office européen des brevets

(11) **EP 4 442 992 A1**

(12) **DEMANDE DE BREVET EUROPEEN**

(43) Date de publication:
**09.10.2024 Bulletin 2024/41**

(21) Numéro de dépôt: **24165586.9**

(22) Date de dépôt: **22.03.2024**

(51) Classification Internationale des Brevets (IPC):
**F03D 7/04** *(2006.01)*   **F03D 7/02** *(2006.01)*

(52) Classification Coopérative des Brevets (CPC):
**F03D 7/049; F03D 7/0292; F03D 7/045;**
F05B 2270/20

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.04.2023 FR 2303434**

(71) Demandeur: **IFP Energies nouvelles**
**92500 Rueil-Malmaison (FR)**

(72) Inventeurs:
• **BEN GHARBIA, Ibtihel**
**92852 RUEIL-MALMAISON CEDEX (FR)**
• **MALISANI, Paul**
**92852 RUEIL-MALMAISON CEDEX (FR)**
• **GUILLEMIN, Fabrice**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE CONTROLE D'UNE FERME D'EOLIENNES AU MOYEN D'UNE METHODE D'OPTIMISATION**

(57)    La présente invention concerne un procédé de contrôle d'une ferme d'éoliennes qui met en oeuvre une acquisition (ACQ) d'une distribution de la vitesse et de la direction du vent, ainsi qu'une acquisition de la vitesse et de la direction du vent en temps réel (Vac), un modèle de ferme d'éoliennes (MOD F) et un modèle de chargement (MODC) pour chaque éolienne. Ensuite, une étape d'optimisation (OPT) permet de déterminer des points de fonctionnement cible pour chaque éolienne, l'étape d'optimisation mettant en oeuvre une optimisation d'une espérance de l'énergie générée pour toute la distribution de la vitesse et de la direction du vent en fonction d'une espérance du chargement de chaque éolienne pour toute la distribution de la vitesse et de la direction du vent. Ces points de fonctionnement cibles (par exemple des angles de lacet cibles) sont ensuite appliqués aux éoliennes de la ferme (CON).

Figure 2

Processed by Luminess, 75001 PARIS (FR)

**Description**

**Domaine technique**

La présente invention concerne le domaine du contrôle d'une ferme d'éoliennes pour maximiser la puissance produite et pour réduire la fatigue des éoliennes.

Une ferme d'éoliennes, également appelé parc éolien ou centrale éolienne est un site regroupant une pluralité d'éoliennes produisant de l'électricité. Ce site peut être sur terre ou en mer. On distingue ainsi des fermes éoliennes terrestres et des fermes éoliennes « offshore », c'est-à-dire en mer.

Les éoliennes de ces fermes sont généralement des éoliennes à axe de rotation horizontal qui disposent d'un système pour orienter l'axe de rotation horizontal dans le sens de la direction du vent, afin de maximiser l'énergie récupérée par l'éolienne. Une éolienne permet de transformer l'énergie cinétique du vent en énergie électrique ou mécanique. Pour la conversion du vent en énergie électrique, elle se compose des éléments suivants :

-    un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite éventuellement une partie des composants électriques et électroniques (modulateur, commande, multiplicateur, générateur, ...) ;

-    une nacelle montée au sommet du mât, abritant des composants mécaniques, pneumatiques, certains composants électriques et électroniques, nécessaires au fonctionnement de la machine (modulateur, commande, multiplicateur, générateur, ...). La nacelle peut tourner pour orienter le rotor dans la bonne direction ;

-    un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques ;

-    éventuellement une transmission, composée notamment de deux axes (arbre mécanique du rotor et arbre mécanique de la machine électrique) reliés par un multiplicateur (boîte de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes et des fermes d'éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les chargements extrêmes de la structure (pales, mât et plate-forme).

**Technique antérieure**

Les fermes d'éoliennes sont sujettes à un phénomène communément appelé « effet de sillage », lorsque les perturbations créées par les turbines situées en amont du parc éolien créent des conditions de production d'électricité sous-optimales pour les autres turbines. En effet, en aval de l'éolienne un sillage tourbillonnaire se forme, et dans ce sillage, la vitesse moyenne du vent est diminuée car l'éolienne a capté une partie de l'énergie cinétique du vent et l'intensité de turbulence est augmentée.

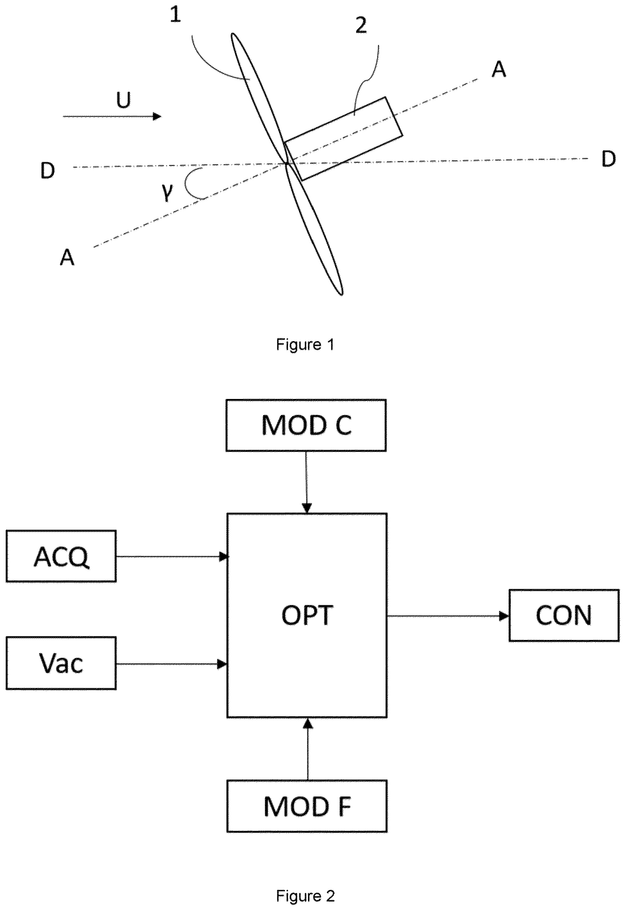

Une stratégie commune pour maximiser la production d'énergie d'une éolienne consiste à orienter son rotor afin que celui-ci soit face au vent. L'angle entre le rotor et la direction du vent, appelé angle de désalignement (« yaw » en anglais), est alors de 0°. La figure 1 illustre schématiquement et de manière non limitative l'angle de désalignement . La figure 1 est une vue de dessus d'une éolienne. L'éolienne comprend des pales 1 et une nacelle 2, orientées selon une direction AA. Le vent est représenté par la flèche U, ayant une direction DD. L'angle γ entre la direction AA et la direction DD est l'angle de désalignement . Lorsque la turbine de l'éolienne est alignée avec la direction du vent, cet angle γ est nul.

Dans les parcs éoliens, cependant, appliquer cette stratégie (angle de désalignement nul) à toutes les turbines, selon une méthode dite « gloutonne », rend le parc sujet à ce qu'on appelle l'effet de sillage : lorsqu'une éolienne extrait de l'énergie du vent, la vitesse du vent en aval diminue et sa turbulence augmente. Cela conduit à des conditions sous-optimales pour la production d'énergie des turbines situées en aval, les pertes en production totale pouvant atteindre les 40% en mer. Un certain nombre d'actionneurs contrôlables peuvent être utilisés pour réduire cet effet : la capture de puissance peut être influencée en contrôlant l'orientation des pales ou le couple du générateur, le sillage d'une turbine peut être dévié sous les turbines en aval en inclinant le plan du rotor, ou sur le côté en modifiant le lacet, selon une technique connue sous le nom anglais de « wake steering » (redirection de sillage). La redirection de sillage est une stratégie de contrôle à l'échelle de la ferme d'éoliennes qui maximise généralement la production totale d'énergie en coordonnant les interactions entre les éoliennes. Contrairement aux stratégies de contrôle standard qui visent à maximiser la performance des éoliennes individuelles, la redirection de sillage sacrifie la production d'énergie de certaines éoliennes pour obtenir une meilleure performance nette pour l'ensemble de la ferme d'éoliennes. En complément de la maximisation de la production, un autre objectif est la limitation ou la diminution de la fatigue structurelle des éoliennes. C'est un compromis additionnel entre le gain de production, l'impact négatif en termes de chargement des éoliennes lié au désalignement, et l'impact positif de la redirection du sillage hors des rotors des éoliennes situées en aval des éoliennes désalignés. Une conséquence positive, en cas de compromis avantageux, est l'augmentation de la durée de vie des éoliennes et la diminution des coûts de maintenance.

Une stratégie consiste à utiliser les actionneurs de lacet (« yaw » en anglais) pour désaligner les turbines par rapport à la direction du vent incident : cela permet une redirection des sillages pour limiter l'impact sur les turbines en aval. Trouver les angles de lacet optimaux (qui maximisent la puissance électrique totale de la ferme d'éoliennes tout en réduisant la fatigue des éoliennes) est un problème complexe.

Pour ce problème complexe, des approches traditionnelles de contrôle peuvent être envisagées : elles utilisent un modèle de propagation du vent dans un parc éolien, et optimisent les angles de lacet par rapport à cette approximation. Divers modèles utilisant des approximations analytiques ou des calculs numériques ont été proposés, mais de tels modèles manquent cependant de précision et ignorent la dynamique du vent turbulent et la propagation du sillage, conduisant à une mauvaise estimation des effets de sillage dans les parcs éoliens. Il existe des modélisations de plus haute-fidélité, qui tiennent compte de l'advection, de la déviation, des méandres et de la fusion du sillage, mais elles sont très coûteuses en temps et en ressources de calcul, ce qui décourage leur utilisation pour une optimisation en temps réel.

Il est possible de s'affranchir de ces contraintes en utilisant des méthodes sans modèle. L'apprentissage par renforcement (RL pour « reinforcement learning » en anglais) en est un exemple : ces méthodes apprennent par essai-erreur, et déduisent les actions optimales uniquement en observant les réponses d'un système aux changements en entrée. Cette approche d'apprentissage en ligne est particulièrement intéressante en raison des incertitudes de modélisation, qui rendent nécessaire d'oublier sur le terrain certains comportements sous-optimaux appris en modélisation. Mais la combinaison avec une approche décentralisée n'est pas évidente : les algorithmes décentralisés limitent l'observabilité du problème pour chaque turbine, rendant leur environnement non stationnaire.

Des méthodes d'apprentissage par renforcement ont été également utilisées pour le contrôle de la production automatique via contrôle du lacet pour un parc éolien : la demande de brevet portant le numéro de dépôt FR 22/12772 illustre une telle méthode d'apprentissage par renforcement. Toutefois, cette méthode ne permet pas un compromis optimal entre l'énergie générée par la ferme d'éoliennes et la fatigue de chaque éolienne dans toutes les situations de vent (vitesse et direction).

De plus, la méthode de brevet US9201410 concerne un système et une méthode pour optimiser une métrique d'une ferme d'éoliennes, en particulier l'énergie générée par la ferme d'éoliennes, en prenant compte le chargement de la ferme d'éoliennes. Toutefois, cette méthode ne permet pas un compromis optimal entre l'énergie générée par la ferme d'éoliennes et la fatigue de chaque éolienne dans toutes les situations de vent (vitesse et direction).

## Résumé de l'invention

La présente invention a pour but de contrôler en temps réel une ferme d'éolienne avec un compromis entre la maximisation de l'énergie générée et la réduction de la fatigue des éoliennes, dans toutes les situations de vent. Pour cela, l'invention concerne un procédé de contrôle d'une ferme d'éoliennes qui met en oeuvre une acquisition d'une distribution de la vitesse et de la direction du vent, ainsi qu'une acquisition de la vitesse et de la direction du vent en temps réel, un modèle de ferme d'éoliennes et un modèle de chargement pour chaque éolienne. Ensuite, une étape d'optimisation permet de déterminer des points de fonctionnement cible pour chaque éolienne, l'étape d'optimisation mettant en oeuvre une optimisation d'une espérance de l'énergie générée pour toute la distribution de la vitesse et de la direction du vent en fonction d'une espérance du chargement de chaque éolienne pour toute la distribution de la vitesse et de la direction du vent. Ces points de fonctionnement cibles (par exemple des angles de lacet cibles) sont ensuite appliqués aux éoliennes de la ferme. La prise en compte de l'espérance de la distribution de la vitesse et de l'espérance de la direction du vent permet de déterminer un compromis entre la maximisation de l'énergie générée et la réduction de la fatigue des éoliennes, dans toutes les situations de vent. En particulier, l'invention permet de trouver un équilibre dans le contrôle entre un vent qui n'est pas fréquent, mais qui peut fatiguer beaucoup les éoliennes, et un vent fréquent qui fatigue peu les éoliennes.

En outre, l'invention concerne une ferme d'éoliennes apte à mettre en oeuvre le procédé de contrôle selon l'invention.

L'invention concerne un procédé de contrôle d'une ferme d'éoliennes, chaque éolienne de ladite ferme d'éoliennes comprenant un actionneur pour modifier un point de fonctionnement de ladite éolienne, notamment l'angle de désalignement de ladite éolienne, l'angle de désalignement étant l'angle formé entre une turbine de ladite éolienne et une direction du vent. Pour ce procédé, on met en oeuvre les étapes suivantes :

a. On acquiert une distribution de la vitesse et de la direction du vent sur le site de ladite ferme d'éoliennes, ainsi que la vitesse et la direction du vent en temps réel ;

b. On construit un modèle de ferme d'éoliennes, ledit modèle de ferme d'éoliennes reliant la vitesse et la direction du vent et ledit point de fonctionnement de chaque éolienne à une puissance générée par ladite ferme d'éoliennes, , ledit modèle de ferme d'éoliennes prenant en compte un effet de sillage ;

c. On construit, pour chaque éolienne, un modèle de chargement, ledit modèle de chargement reliant la vitesse et la direction du vent et ledit point de fonctionnement de chaque éolienne au chargement d'au moins un composant de ladite éolienne ;

d. On détermine, pour chaque éolienne, un point de fonctionnement cible par une méthode d'optimisation de l'espérance de la puissance générée par ladite ferme d'éoliennes déterminée par ledit modèle de ferme d'éoliennes pour la distribution de la vitesse et la direction du vent acquise, l'espérance de chargement de chaque éolienne déterminée par ledit modèle de chaque éolienne pour la distribution de la vitesse et la direction du vent acquise étant un paramètre de la fonction coût de ladite méthode d'optimisation à optimiser, ou une contrainte de ladite méthode d'optimisation, et ladite méthode d'optimisation prenant en compte ladite vitesse et ladite direction du vent en temps réel ; et

e. On contrôle le point de fonctionnement de chaque éolienne en appliquant, au moyen dudit actionneur, le point de fonctionnement cible déterminé.

Selon un mode de réalisation, ledit point de fonctionnement est l'angle de désalignement, et ladite méthode d'optimisation est contrainte par une plage de variation dudit angle de désalignement de chaque éolienne.

Conformément à une mise en oeuvre, on acquiert une distribution de la vitesse et de la direction du vent et/ou la vitesse et la direction du vent en temps réel par mesure au moyen d'au moins un capteur LiDAR et/ou d'au moins un anémomètre et/ou d'au moins un système de contrôle et d'acquisition de données.

Avantageusement, ladite méthode d'optimisation met en oeuvre une somme pondérée de la puissance générée et du chargement.

De manière avantageuse, ladite méthode d'optimisation met en oeuvre une optimisation de la puissance générée sous une contrainte liée au chargement, notamment sous contrainte que, pour chaque éolienne, l'espérance du chargement ne soit pas supérieure au chargement nominal global ou sous contrainte que, pour chaque éolienne, l'espérance de chargement ne soit pas supérieure au chargement nominal maximal de toutes les éoliennes confondues.

Selon un aspect, ladite méthode d'optimisation met en oeuvre une résolution sous forme de Lagrangien, avec une méthode de pénalisation, notamment au moyen de barrières logarithmiques, et éventuellement au moyen de l'algorithme d'Uzawa.

Selon une option de réalisation, ledit modèle de chargement détermine un chargement équivalent en dommage, notamment pour les pales ou le mat de l'éolienne.

Conformément à un mode de réalisation, on construit ledit modèle de la ferme d'éoliennes au moyen d'un modèle aérodynamique de ladite ferme d'éoliennes et d'un modèle de sillage.

Selon une mise en oeuvre, ledit modèle de chargement est une cartographie préalablement obtenue au moyen d'une modélisation servo-aéro-hydro-élastique.

En outre, l'invention concerne une ferme d'éoliennes, pour laquelle chaque éolienne de ladite ferme d'éoliennes comprend un actionneur pour modifier un point de fonctionnement de l'éolienne, notamment l'angle de désalignement de ladite éolienne, l'angle de désalignement étant l'angle formé entre la turbine de ladite éolienne et une direction du vent. Ladite ferme d'éoliennes comprend des moyens informatiques pour mettre en oeuvre le procédé de contrôle d'une ferme d'éoliennes selon l'une des caractéristiques précédentes.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1, déjà décrite, illustre l'angle de désalignement d'une éolienne.

La figure 2 illustre les étapes du procédé de contrôle selon un mode de réalisation de l'invention.

La figure 3 illustre, pour un exemple, une implémentation d'une ferme d'éoliennes.

La figure 4 illustre une rose de vents (vitesse et direction) pour le site de la ferme d'éoliennes de l'exemple de la figure 3.

La figure 5 est un graphique du chargement DEL pour chaque éolienne pour l'exemple des figures 3 et 4, le chargement étant respectivement un chargement nominal, un chargement déterminé par un procédé selon l'art antérieur ne prenant pas en compte le chargement DEL, et trois chargements déterminés par trois modes de réalisation du procédé selon l'invention.

## Description des modes de réalisation

La présente invention concerne un procédé de contrôle en temps réel d'une ferme d'éoliennes. Une ferme d'éoliennes, également appelé parc éolien ou centrale éolienne est un site regroupant une pluralité d'éoliennes produisant de l'électricité. Chaque éolienne (également appelée par abus de langage turbine) de la ferme d'éoliennes comprend un actionneur pour modifier un point de fonctionnement de l'éolienne. Un exemple de point de fonctionnement peut être l'angle de désalignement (de l'anglais « yaw ») de l'éolienne. D'autres points de fonctionnement peuvent être notamment le bridage de l'éolienne, ou la modification de la courbe de puissance de l'éolienne. La position des éoliennes au sein de la ferme d'éoliennes, appelée également agencement des éoliennes ou implémentation des éoliennes, est préalablement connue.

Dans la suite de la description, seul le contrôle de l'angle de désalignement est décrit, toutefois d'autres points de fonctionnement peuvent être contrôlés par le procédé selon l'invention

Dans la présente demande, les termes amont et aval sont définis selon la direction du vent (une éolienne en amont est soumise au vent avant une éolienne située en aval).

Le procédé selon l'invention comprend les étapes suivantes :

1) Acquisition d'une distribution de la vitesse et de la direction du vent
2) Construction d'un modèle de la ferme d'éoliennes
3) Construction d'un modèle de chargement
4) Détermination d'un point de fonctionnement cible
5) Contrôle de chaque éolienne

Les étapes 2 à 4 peuvent être mises en oeuvre par des moyens informatiques, notamment un ordinateur, un processeur ou un calculateur. Les étapes sont détaillées dans la suite de la description.

La figure 2 illustre, schématiquement et de manière non limitative, les étapes du procédé de contrôle de ferme selon un mode de réalisation de l'invention. On acquiert (ACQ) une distribution de la vitesse et de la direction du vent sur le site de la ferme d'éoliennes, ainsi qu'une vitesse et une direction du vent actuel (Vac). On construit un modèle de la ferme d'éoliennes (MOD F) qui détermine l'énergie générée par la ferme d'éoliennes en fonction de la vitesse et de la direction du vent, et du point de fonctionnement de chaque éolienne. Pour chaque éolienne, on construit un modèle de chargement (MOD C) qui détermine le chargement de chaque éolienne en fonction de la vitesse et de la direction du vent, et du point de fonctionnement de chaque éolienne. Puis, au moyen d'une méthode d'optimisation (OPT), on détermine un point de fonctionnement cible en fonction de la vitesse et de la direction du vent actuel (Vac). L'optimisation (OPT) met en oeuvre les deux modèles (MOD F, MOD C) et la distribution de la vitesse et de la direction du vent acquise (ACQ). Puis, on contrôle (CON) les éoliennes de la ferme en fonction du point de fonctionnement cible et de la vitesse et de la direction du vent actuel (Vac).

## 1) Acquisition d'une distribution de la vitesse et de la direction du vent

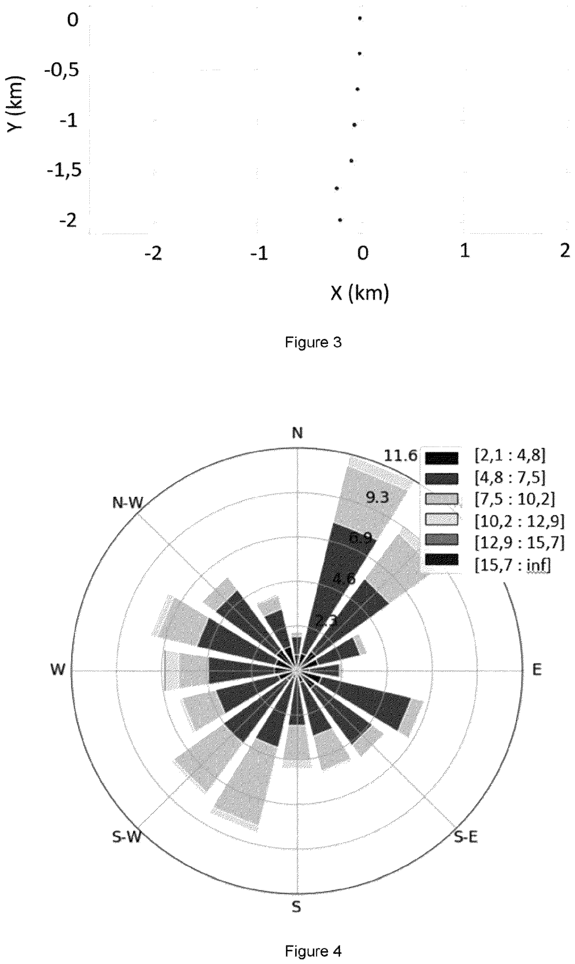

Lors de cette étape, on acquiert une distribution de la vitesse et de la direction du vent sur le site de la ferme d'éolienne. La distribution de la vitesse et de la direction du vent, est un historique de la vitesse et de la direction du vent, qui peut être acquise pour une durée prédéterminée, par exemple d'au moins un an afin de prendre en compte les phénomènes climatiques saisonniers. On appelle distribution une répartition statistique de la vitesse et de la direction du vent. Cette distribution peut être représentée graphiquement par un histogramme polaire, appelé également rose des vents. La figure 4 est un exemple de rose des vents appliqué à l'exemple décrit dans la suite de la description. Cette distribution de la vitesse et de la direction du vent permet de connaître les occurrences relatives aux configurations de vent (vitesse, direction) sur le site de la ferme d'éoliennes, et d'en déduire des probabilités de ces configurations de vent. De plus, lors de cette étape, on acquiert la vitesse et la direction du vent actuelle. En d'autres termes, on acquiert la configuration du vent (vitesse, direction) en temps réel, pour appliquer un contrôle en temps réel.

Selon un aspect de l'invention, le système d'acquisition de données peut mettre à disposition des statistiques de quantités d'intérêt telles que la moyenne ou l'écart type jointif, obtenu périodiquement et calculé pour une durée prédéterminée. Selon un exemple non limitatif, la période prédéterminée peut valoir entre 1 minute et une heure, de préférence entre 5 minutes et 20 minutes. Il est ainsi possible d'acquérir des séries temporelles de vitesse et de direction de vent moyennes, pendant une durée à définir, sur par exemple une ou plusieurs années. Ce jeu de données permet de déduire une distribution statistique des vitesses et directions du vent, que l'on peut se représenter visuellement par une rose des vents affichant une répartition associée à une classification (« binning » en anglais) des conditions de vent (direction, vitesse, nombre d'occurrences).

Selon un mode de réalisation, la vitesse et la direction du vent peuvent être mesurées (que ce soit pour l'historique ou pour le temps réel), notamment au moyen d'au moins un capteur LiDAR (acronyme de l'expression en langue anglaise « light détection and ranging » pouvant être traduite par télédétection par Laser), et/ou d'au moins un anémomètre, et/ou par des mesures au moyen d'au moins un système de contrôle et d'acquisition de données en temps réel SCADA (de l'anglais : « Supervisory Control And Data Acquisition »), ou par tout capteur analogue. Un système de contrôle et d'acquisition de données en temps réel SCADA est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). On peut déduire de ces mesures la vitesse du vent non perturbé à l'entrée de la ferme d'éoliennes, l'entrée de la ferme d'éoliennes étant définie en fonction de la direction du vent.

2) Construction d'un modèle de la ferme d'éoliennes

Lors de cette étape, on construit un modèle de la ferme d'éoliennes. Le modèle de la ferme d'éoliennes relie la vitesse et la direction du vent amont et le point de fonctionnement de chaque éolienne, et son positionnement dans la ferme d'éoliennes, à la puissance générée par la ferme d'éoliennes. En d'autres termes, le modèle de la ferme d'éoliennes a pour entrées la vitesse et la direction du vent amont ainsi que la localisation, le dimensionnement et le point de fonctionnement de chaque éolienne, et a pour sortie la puissance générée par la ferme d'éoliennes. De plus, le modèle de ferme d'éoliennes est représentatif des effets de sillage induits par le fonctionnement des éoliennes. Autrement dit, le modèle de la ferme de sillage permet de modéliser l'effet de sillage. De cette manière, le modèle permet de déterminer le fonctionnement de chaque éolienne, même lorsqu'une éolienne se trouve dans le sillage d'une éolienne en amont. Ainsi, ce modèle est représentatif des phénomènes physiques en jeu au sein d'un parc éolien, en particulier les phénomènes aérodynamiques, et éventuellement aéroélastiques.

Conformément à une mise en oeuvre de l'invention, la puissance générée par la ferme d'éoliennes déterminée par le modèle de ferme d'éolienne peut être la production annuelle d'énergie AEP (de l'anglais « Annual Energy production »). Ainsi, le procédé selon l'invention permet d'optimiser l'énergie générée par la ferme d'éolienne sur une année, et de cette manière de bien prendre en compte les variations saisonnières climatiques.

Selon un mode de réalisation de l'invention, on peut construire le modèle de la ferme d'éoliennes au moyen d'un modèle aérodynamique de la ferme d'éolienne, et d'un modèle de sillage. Par exemple, on peut construire le modèle de ferme d'éoliennes au moyen d'un simulateur de parc éolien pour calculer les caractéristiques aérodynamiques de la ferme d'éolienne. En particulier, la modélisation des éoliennes, en particulier leur rotor, peut exploiter la géométrie et le profil aérodynamique des pales, ainsi que des cartographies des coefficients de puissance et de poussée en fonction de la vitesse du vent. Le modèle de sillage peut être inclus dans le simulateur de parc éolien, pour modéliser les interactions aérodynamiques des éoliennes. Le modèle de sillage peut, par exemple, être un modèle super-gaussien, ou tout modèle analogue. Ensuite, on peut mettre en oeuvre, non limitativement, une superposition locale de la somme des sillages pour implémenter la superposition des effets de sillage de plusieurs éoliennes successives.

3) Construction d'un modèle de chargement

Lors de cette étape, on construit, pour chaque éolienne, un modèle de chargement. Le modèle de chargement relie la vitesse et la direction du vent et le point de fonctionnement de l'éolienne à un chargement d'au moins un composant (par exemple pales, la transmission, les actionneurs ou le mat, voie les ancrages et amarrages pour les éoliennes flottantes) de l'éolienne. En d'autres termes, le modèle de chargement a pour entrées la direction et la vitesse du vent ainsi que le point de fonctionnement de l'éolienne, et a pour sortie le chargement de l'éolienne. On appelle chargement une charge d'une éolienne, cette charge générant de la fatigue du composant de l'éolienne.

Conformément à une mise en oeuvre de l'invention, le chargement peut être un chargement équivalent en dommage DEL (de l'anglais « Damage Equivalent Load »). Le chargement DEL peut être défini comme l'amplitude d'une charge sinusoïdale d'une fréquence spécifiée autour d'une moyenne de charge fixe spécifiée qui influerait sur la capacité d'une structure à résister à la charge évaluée.

Avantageusement, le modèle de chargement peut déterminer le chargement DEL des pales de l'éolienne. Ainsi, on peut obtenir une représentation de la fatigue des éléments structurants d'intérêt de l'éolienne. En variante, le modèle de chargement peut déterminer le chargement DEL du mat, ou de la transmission, ou des actionneurs de l'éolienne. Dans le cas de l'évaluation de technologies offshore flottantes, le modèle de chargement peut déterminer le chargement DEL du flotteur, des amarrages et des ancrages de l'éolienne.

Selon un aspect de l'invention, le chargement, en particulier le chargement DEL, peut être déterminé au moyen d'une surface de réponse, ou d'une cartographie multidimensionnelle, de préférence synthétisée à l'aide de simulations couplées servo-aéro-hydro-élastiques.

4) Détermination d'un point de fonctionnement cible

Lors de cette étape, on détermine, au moyen d'une méthode d'optimisation, un point de fonctionnement cible (par exemple l'angle de désalignement cible) pour chaque éolienne. Le point de fonctionnement cible correspond à une consigne du point de fonctionnement à appliquer à l'éolienne. La méthode d'optimisation met en oeuvre le modèle de ferme d'éoliennes construit à l'étape 2, le modèle de chargement construit à l'étape 3 ainsi que la distribution de la vitesse et la direction du vent acquise à l'étape 1. Pour cela, on applique la méthode d'optimisation à l'espérance de la puissance générée déterminée par le modèle de la ferme d'éoliennes pour toute la distribution de la vitesse et de la direction du vent acquise, en fonction d'une espérance de chargement de chaque éolienne déterminée par le modèle de chargement pour toute la distribution de la vitesse et de la direction du vent acquise. L'expression « en fonction d'une espérance de chargement » signifie que l'espérance de chargement est un paramètre de la fonction coût à optimiser, ou une contrainte de la méthode d'optimisation. On rappelle que l'espérance d'une variable aléatoire correspond à la moyenne des valeurs possibles pondérées par les probabilités associées à ces valeurs. Les probabilités considérées pour les espérances, correspondent aux probabilités issues de la distribution de la vitesse et de la direction du vent. De cette manière, la méthode d'optimisation dépend de l'espérance de la distribution de la vitesse et de la direction du vent. En particulier, l'invention permet de trouver un équilibre dans le contrôle entre un vent qui n'est pas fréquent, mais qui peut fatiguer beaucoup les éoliennes, et un vent fréquent qui fatigue peu les éoliennes. Une fois l'optimisation réalisée, on détermine le point de fonctionnement cible pour le vent actuel acquis (vitesse et direction actuelles du vent).

Pour le mode de réalisation pour lequel le point de fonctionnement est l'angle de désalignement, la méthode d'optimisation peut être contrainte par la plage de variation de l'angle de désalignement de chaque éolienne. On appelle plage de variation de l'angle de désalignement l'intervalle dans lequel peut varier l'angle de désalignement pour chaque éolienne. Cette plage de variation est limitée par une borne minimale et par une borne maximale de l'angle de désalignement. Cette contrainte permet d'éviter que le procédé ne détermine un point de fonctionnement non atteignable, ce qui assure une optimisation plus rapide et nécessitant moins de ressources informatiques, grâce à une limitation du domaine de l'optimisation.

De manière avantageuse, la méthode d'optimisation peut concerner un problème d'optimisation avec probabilité discrète. En effet, le problème d'optimisation permet de calculer les angles de lacet optimaux de la ferme d'éoliennes pour toutes les configurations de vent. Si on note w la variable aléatoire du vent définie par la vitesse du vent $w_s$ et la direction du vent $w_d$, $N_w$ le nombre de données acquises de la vitesse et de la direction du vent, et $(w_i)_{i=1,...,Nw}$ la séquence des valeurs des données acquises de la vitesse et de la direction du vent, on peut écrire :

$$\mathbb{P}_w := \sum_{i=1}^{N_w} p_{w_i} \delta_{w_i}$$

Avec $\mathbb{P}_w$ l'espérance de la production générée par la ferme d'éoliennes, $p_w$ la probabilité d'occurrence du vent w (issue de la distribution) et $\delta_{wi}$ la puissance produite par la ferme d'éoliennes pour la configuration du vent $w_i$.

On peut définir $\overline{\theta}$ par :

$$\bar{\theta} = \left( \bar{\theta}_1, \ \ldots, \ \bar{\theta}_{N_w} \right) := \left( \theta(w_1), \ \ldots, \ \theta(w_{N_w}) \right)$$

Avec $\theta$ le vecteur des consignes de désalignement des éoliennes de la ferme d'éoliennes. On peut alors définir l'espérance de la fonction f par :

$$\mathbb{E}_w f(\theta(w)) := \sum_{i=1}^{N_w} p_{w_i} f(\bar{\theta}_i)$$

Avec $\mathbb{E}_w \varphi$ l'espérance de $\varphi$ par rapport à la variable aléatoire w.

Conformément à une mise en oeuvre de l'invention, la résolution de la méthode d'optimisation peut être sous la forme de Lagrangien, avec une méthode de pénalisation des contraintes, notamment au moyen de barrières logarithmes, ou toute méthode de pénalisation analogue. De plus, la résolution peut être obtenue au moyen de l'algorithme d'Uzawa (qui est un algorithme du gradient à pas fixe avec projection pour résoudre de manière itérative un problème dual), ou tout algorithme analogue.

Selon un premier mode de réalisation de l'invention, la méthode d'optimisation peut se baser sur une somme pondérée de la puissance générée (déterminée par le modèle de ferme d'éoliennes) et du chargement (déterminé par le modèle de chargement).

Selon un exemple de ce premier mode de réalisation, le modèle d'optimisation de la somme pondérée peut concerner la résolution du problème suivant :

$$\min_{\theta} \mathbb{E}_w J_{\mathrm{WS}}(\theta(w), \alpha(w)) := \mathbb{E}_w \left[ -\alpha(w) \frac{\mathrm{P}(\theta(w), w)}{\mathbb{E}_w \mathrm{P}(0, w)} + (1 - \alpha(w)) \sum_{t=1}^{N_T} \frac{(\mathrm{F}(\theta(w), w))_t}{\mathbb{E}_w \sum_t (\mathrm{F}(0, w))_t} \right]$$

Sous la contrainte suivante :

$$\theta(w) \in [\theta^-, \theta^+]^{N_T}, \forall w$$

Avec w la variable aléatoire du vent définie par la vitesse du vent $w_s$ et la direction du vent $w_d$, $\mathbb{E}_w \varphi$ espérance de $\varphi$ par rapport à la variable aléatoire w, $\theta$ vecteur des consignes de désalignement des éoliennes de la ferme d'éoliennes, $\theta^-$ et $\theta^+$ les bornes de variation minimale et maximale du désalignement, 0 correspondant à aucun désalignement des éoliennes de la ferme d'éoliennes, Jws la somme pondérée des deux fonctions objectifs, P la puissance produite par la ferme d'éoliennes, t l'indice de l'éolienne dans la ferme, $N_T$ le nombre d'éoliennes dans la ferme d'éoliennes, F le chargement de l'éolienne, et $\alpha$ la fonction de pondération comprise en 0 et 1 et réglée à la valeur maximale permettant de satisfaire :

$$\mathbb{E}_w \sum_t (\mathrm{F}(\theta^*(w), w))_t \leq E_w \sum_t (\mathrm{F}(0, w))_t$$

Avec $\theta^*$ le point de fonctionnement (par exemple l'angle de désalignement) solution du problème d'optimisation. Une telle formulation permet d'obtenir un problème d'optimisation bi-objectif, exprimé comme un objectif unique, par une approche standard de la scalarisation par somme pondérée.

Selon une option de réalisation, les contraintes de ce problème d'optimisation peuvent être traitées à l'aide de barrières logarithmiques. On peut alors écrire :

$$\min_{\bar{\theta}} \sum_i p_{w_i} J_{\text{WS},\epsilon}(\bar{\theta}_i, \alpha(w_i)) := \sum_{i=1}^{N_w} \left[ p_{w_i} \left( -\alpha(w_i)\frac{\mathrm{P}(\bar{\theta}_i, w_i)}{P_n} + (1-\alpha(w_i)) \sum_{t=1}^{N_T} \frac{(\mathrm{F}(\bar{\theta}_i, w_i))_t}{F_n} \right) \right.$$

$$\left. - \epsilon \sum_{t=1}^{N_T} \log((\bar{\theta}_i)_t - \theta^+) + \log(\theta^- - (\bar{\theta}_i)_t) \right]$$

$$:= \sum_{i=1}^{N_T} J_{\text{WS},\epsilon}^i(\bar{\theta}_i, \alpha(w_i))$$

$$P_n := \mathbb{E}_w \mathrm{P}(0, w) = \sum_{i=1}^{N_w} p_{w_i} \mathrm{P}(0, w_i)$$

$$F_n := \mathbb{E}_w \sum_t (\mathrm{F}(0, w))_t = \sum_{i=1}^{N_w} p_{w_i} \sum_t (\mathrm{F}(0, w_i))_t$$

Il apparait que ce problème est séparable dans le domaine de $\overline{\theta_i}$ . Les problèmes obtenus sont alors indépendants et peuvent être résolus en parallèle.

Selon un deuxième mode de réalisation, la méthode d'optimisation peut mettre en oeuvre une optimisation de l'espérance de la puissance générée pour toute la distribution de la vitesse et de la direction du vent sous contrainte liée à l'espérance du chargement pour toute la distribution de la vitesse et de la direction du vent.

Conformément à une première variante de ce deuxième mode de réalisation, la méthode d'optimisation peut être une maximisation de l'espérance de la puissance générée pour toute la distribution de la vitesse et de la direction du vent sous la contrainte que, pour chaque turbine, l'espérance du chargement ne soit pas supérieure à l'espérance du chargement nominal (qui correspond au chargement sans désalignement des éoliennes). On peut alors écrire :

$$\max_{\theta} \mathbb{E}_w \mathrm{P}(\theta(w), w)$$

sous les contraintes suivantes :

$$\mathbb{E}_w \mathrm{F}(\theta(w), w) \le \mathbb{E}_w \mathrm{F}(0, w)$$
$$\theta(w) \in [\theta^-, \theta^+]^{N_T}, \forall w$$

avec w la variable aléatoire du vent définie par la vitesse du vent $w_s$ et la direction du vent $w_d$, $\mathbb{E}_w \varphi$ l'espérance de $\varphi$ par rapport à la variable aléatoire w, $\theta$ le vecteur des consignes de désalignement des éoliennes de la ferme d'éoliennes, $\theta^-$ et $\theta^+$ les bornes de variation minimale et maximale du désalignement, 0 correspondant à aucun désalignement des éoliennes de la ferme d'éoliennes, P la puissance produite par la ferme d'éoliennes, $N_T$ le nombre d'éoliennes dans la ferme d'éoliennes, F le chargement de l'éolienne.

Ces contraintes limitent le niveau du chargement admissible au niveau nominal (qui correspond au chargement sans désalignement des éoliennes) pour chaque turbine de la ferme considérée individuellement.

Pour cette première variante du deuxième mode de réalisation, on peut mettre en oeuvre une résolution utilisant les barrières logarithmiques. Les contraintes peuvent être traitées dans un cadre de dualité. Les barrières logarithmiques peuvent ne pas être utilisées pour les contraintes de chargement, car il peut être difficile d'initialiser les angles de lacet de telle sorteque les contraintes soient strictement satisfaites. Le Lagrangien pénalisé $L_\varepsilon$ peut être défini de la manière suivante :

$$L_{\epsilon}(\bar{\theta}, \lambda) := \sum_{i}^{N_w} \left[ p_{w_i} \left( -P(\bar{\theta}_i, w_i) + \lambda^T \left[ F(\bar{\theta}_i, w_i) - F(0, w_i) \right] \right) - \epsilon \sum_{t=1}^{N_T} \log((\bar{\theta}_i)_t - \theta^+) + \log(\theta^- - (\bar{\theta}_i)_t) \right]$$

Avec $\lambda$ le multiplicateur de Lagrange. On peut alors utiliser l'algorithme classique d'Uzawa, basé sur la dualité pour résoudre ce problème.

Une particularité innovante de l'utilisation de l'algorithme d'Uzawa, dans le contexte de l'invention est que la mise à jour du tableau de pondérations $\lambda^T$ peut s'effectuer en fonction du score d'espérance du chargement (par exemple DEL) obtenu à la dernière itération. En particulier, le tableau de paramètres $\lambda^T$ peut s'obtenir à partir d'un ensemble de fonctions linéaires des écarts entre les scores de DEL obtenus avec l'optimisation et les scores DEL nominaux. Ces écarts sont obtenus à chaque itération de l'algorithme, pour la distribution de vent étudiée, soit :

$$\lambda \leftarrow \max \left\{ 0; \sum_i p_{w_i} \left[ F(\bar{\theta}_i, w_i) - F(0, w_i) \right] \right\}$$

Conformément à une deuxième variante de ce deuxième mode de réalisation, la méthode d'optimisation peut être une maximisation de l'espérance de la puissance générée pour toute la distribution de la vitesse et de la direction du vent, sous la contrainte que, pour chaque turbine, l'espérance du chargement ne soit pas supérieure à l'espérance du chargement nominal maximal, toutes éoliennes confondues (qui correspond au chargement maximal d'une des éoliennes de la ferme sans désalignement des éoliennes). On peut alors écrire :

$$\max_{\theta} \mathbb{E}_w P(\theta(w), w)$$

sous les contraintes suivantes :

$$\mathbb{E}_w F(\theta(w), w) \leq \max_t \left( \mathbb{E}_w F(0, w) \right)_t$$

$$\theta(w) \in [\theta^-, \theta^+]^N, \forall w$$

avec w la variable aléatoire du vent définie par la vitesse du vent $w_s$ et la direction du vent $w_d$, $\mathbb{E}_w \varphi$ espérance de $\varphi$ par rapport à la variable aléatoire w, $\theta$ vecteur des consignes de désalignement des éoliennes de la ferme d'éoliennes, $\theta^-$ et $\theta^+$ les bornes de variation minimale et maximale du désalignement, 0 correspondant à aucun désalignement des éoliennes de la ferme d'éoliennes, P la puissance produite par la ferme d'éoliennes, $N_T$ le nombre d'éoliennes dans la ferme d'éoliennes, F le chargement de l'éolienne.

Pour deuxième variante du deuxième mode de réalisation, on peut mettre en oeuvre une résolution utilisant les barrières logarithmiques. Les contraintes peuvent être traitées dans un cadre de dualité. Les barrières logarithmiques peuvent ne pas être utilisées pour les contraintes de chargement, car il peut être difficile d'initialiser les angles de lacet de telle sorte que les contraintes soient strictement satisfaites. En d'autres termes, pour une configuration de vent donnée (vitesse et direction), lorsque la redirection de sillage est appliquée, l'espérance du chargement ne peut pas être supérieure à un niveau donné. Ce niveau donné est celui atteint par l'éolienne subissant le plus de fatigue structurelle en conditions de fonctionnement standard, c'est-à-dire celle ayant le maximum d'espérance de chargement pour la même configuration de vent.

On peut alors introduire la valeur F+ telle que :

$$F^+ := \max_t \mathbb{E}_w F(0, w) = \max_t \sum_{i=1}^{N_w} p_{w_i} F(0, w_i)_t$$

Le lagrangien $\ell_\varepsilon$ peut alors s'écrire :

$$\ell_\varepsilon(\bar{\theta}, \lambda) := \sum_i^{N_w} \left[ p_{w_i} \left( -\mathrm{P}(\bar{\theta}_i, w_i) + \lambda^T \left[ \mathrm{F}(\bar{\theta}_i, w_i) - F^+ \right] \right) - \epsilon \sum_{t=1}^{N_T} \log((\bar{\theta}_i)_t - \theta^+) + \log(\theta^- - (\bar{\theta}_i)_t) \right]$$

On peut alors utiliser l'algorithme classique d'Uzawa, basé sur la dualité pour résoudre ce problème.

5) Contrôle de chaque éolienne

Lors de cette étape, on contrôle chaque éolienne en appliquant l'angle de désalignement cible (ou le point de fonctionnement cible) déterminé à l'étape 4. Pour cette étape, pour chaque éolienne, on contrôle l'actionneur du point de fonctionnement de l'éolienne. Notamment, on peut contrôler l'actionneur de l'angle de désalignement de l'éolienne.

Selon un mode de réalisation, le contrôle de l'angle de désalignement peut correspondre à un contrôle à une valeur précise de l'angle de désalignement.

En outre, l'invention concerne une ferme d'éoliennes. Chaque éolienne de la ferme d'éoliennes comprend un actionneur pour modifier l'angle de désalignement de l'éolienne ou le point de fonctionnement de l'éolienne. En outre, la ferme d'éoliennes comprend des moyens informatiques, notamment un ordinateur, un processeur ou calculateur pour mettre en oeuvre les étapes de calcul du procédé de contrôle selon l'une quelconque des variantes ou des combinaisons de variantes décrites ci-dessous. La ferme d'éoliennes est par conséquent pilotée par les moyens informatiques. En particulier, les moyens informatiques permettent de :

- Acquérir la distribution de la vitesse et de la direction du vent,
- Construire et mettre en oeuvre un modèle de ferme d'éoliennes,
- Construire et mettre en oeuvre un modèle de chargement (notamment équivalent en fatigue),
- Réaliser une méthode d'optimisation pour déterminer pour chaque éolienne un point de fonctionnement cible, et
- Contrôler l'angle de désalignement de chaque éolienne ou le point de fonctionnement.

Les moyens informatiques peuvent être centralisés : la ferme d'éoliennes comporte une seule unité informatique qui met en oeuvre les étapes du procédé de contrôle, et qui communique avec a minima tous les actionneurs d'angle de désalignement. Alternativement, chaque éolienne comprend une unité informatique, toutes les unités informatiques communiquant entre elles.

Selon un mode de réalisation, la ferme d'éoliennes peut comprendre un capteur de mesure du vent, notamment un capteur LiDAR ou un anémomètre.

Selon un aspect de l'invention, la ferme d'éoliennes peut comprendre des moyens de mesure SCADA.

Selon une option de réalisation, la ferme d'éoliennes peut comprendre des moyens de communication, notamment pour transmettre les données acquises à l'étape 1 et/ou pour communiquer les angles de lacet cibles aux contrôleurs.

Exemple

Les caractéristiques et avantages du procédé selon l'invention apparaitront plus clairement à la lecture de l'exemple d'application ci-après.

Pour cet exemple, on considère une ferme d'éoliennes qui comprend sept éoliennes. La figure 3 illustre l'implémentation des éoliennes par des points, dans un repère (X ; Y) en km. Cette disposition quasi-alignée des éoliennes génère un fort effet de sillage. Les éoliennes de cette ferme ont un rotor de 82 m de diamètre, et une puissance nominale de 2 MW. De plus, on acquiert des mesures de la vitesse et de la direction du vent pendant deux ans (en 2017 et 2018). Ces mesures sont obtenues par des données SCADA de la ferme d'éoliennes. Ces mesures de la vitesse et de la direction du vent permettent de déterminer la distribution du vent sous la forme d'une rose des vents tels qu'illustrée en figure 4. Sur cette figure, pour chaque direction de vent (exprimée dans un repère cardinal), on a un triangle dont la hauteur illustre l'occurrence de cette direction de vent pendant la période de mesure (en d'autres termes plus le triangle est grand, plus cette direction de vent a été mesurée pendant la période de mesure). De plus, chaque direction de vent est découpée en plusieurs portions en niveau de gris pour illustrer la distribution de la vitesse du vent. Ainsi, chaque portion de triangle correspond à une vitesse de vent. L'échelle des vitesses de vent est indiquée sur la figure en m/s.

Pour les simulations, on utilise un simulateur de parc éolien, qui utilise un code BEM (de l'anglais « Blade Elément Momentum » qui peut être traduit par quantité de mouvement d'élément de pale) pour calculer les caractéristiques aérodynamiques. La modélisation des éoliennes, en particulier leur rotor exploite la géométrie et le profil aérodynamique des pales, ainsi que des cartographies des coefficients de puissance et de poussée en fonction de la vitesse du vent. Le simulateur de parc éolien modélise également les interactions aérodynamiques des éoliennes : les effets de sillage. Le modèle de sillage est un modèle super-gaussien : les paramètres de ce sillage super-gaussien sont une fonction de l'intensité de turbulence ambiante et du point de fonctionnement de l'éolienne définissant le coefficient de poussée. Une superposition locale de la somme linéaire des sillages est utilisée pour implémenter la superposition des effets de sillage de plusieurs éoliennes successives. La déflection du sillage liée à un désalignement d'une éolienne par rapport à la direction moyenne du vent est représentée par le modèle de Jimenez.

Afin de déterminer les charges équivalentes aux dommages (DEL), un modèle a été développé embarquant une surface cartographiée multi-dimensionnelle (6D et 5D). Le modèle de charge DEL est donc une surface de réponse résultant d'une étude paramétrique de la fatigue en pied de pale. Cette analyse dépend de la vitesse du vent, de l'angle de désalignement, l'intensité de la turbulence, le taux de recouvrement de l'éolienne aval avec l'empreinte de l'éolienne amont, la distance entre l'éolienne amont et l'éolienne aval, et une génération de signaux aléatoires avec des graines distinctes pour effectuer plusieurs réalisations indépendantes. L'approche a mis en oeuvre des outils de modélisation servo-aéro-élastiques haut fidélité (par exemple DEEPLINES WIND™ ou FAST™) pour renseigner la surface de réponse multi-dimensionnelle.

Pour cet exemple, on définit plusieurs critères :

- La production annuelle d'énergie AEP : $$\text{AEP}(\theta) := 8760 \cdot \mathbb{E}_w \text{P}(\theta(w), w)$$
- Le gain de production annuelle d'énergie : Gain AEP($\theta$) [%] := 100(AEP($\theta$) - AEP(0))/AEP(0) correspondant à (P($\vec{\theta_i}$, $w_i$) - P(0, $w_i$)) /P(0, $w_i$), avec $\vec{\theta_i}$ l'angle de désalignement optimal pour la configuration de vent $w_i$,
- Le gain d'optimisation du chargement DEL :

$$\text{Gain DEL}(\theta) \, [\%] := 100 \left( \sum_t \mathbb{E}_w \left( \text{F}(\theta(w), w) \right)_t - \mathbb{E}_w \left( \text{F}(0, w) \right)_t \right) / \sum_t \mathbb{E}_w \left( \text{F}(0, w) \right)_t$$

- Le rapport des dommages: $$\frac{\text{D}_1}{\text{D}_2} = \left( \frac{\text{DEL}_1}{\text{DEL}_2} \right)^m$$ avec m le coefficient de Wöhler, qui est égal à 4 pour la pale, ou 10 pour le mat.

Pour cet exemple, on applique les optimisations suivantes :

- Une optimisation de l'art antérieur sans désalignement des éoliennes, notée NOM,
- Une optimisation uniquement de la puissance générée de l'art antérieur avec désalignement des éoliennes, sans considérer la fatigue, notée AA,
- Une optimisation selon le premier mode de réalisation de l'invention, notée INV1,
- Une optimisation selon la première variante du deuxième mode de réalisation de l'invention, notée INV2, et
- Une optimisation selon la deuxième variante du deuxième mode de réalisation de l'invention, notée INV3.

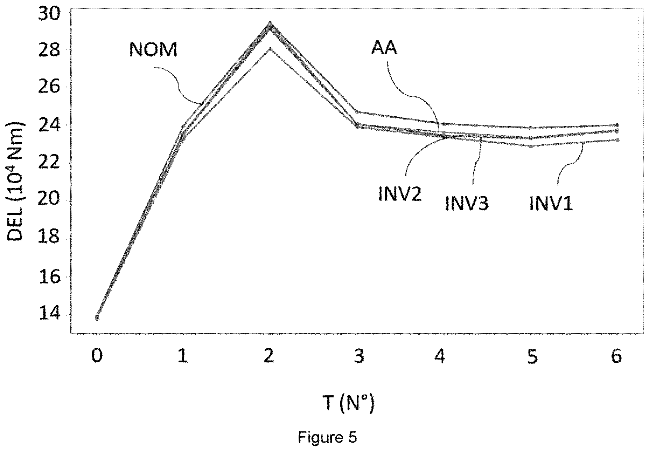

La figure 5 illustre, la valeur du chargement DEL en Nm pour chaque éolienne T numérotée de 0 à 6. On remarque que, quel que soit le mode de réalisation de l'invention, le procédé selon l'invention permet de réduire le chargement, donc la fatigue, de six des sept éoliennes de la ferme d'éoliennes.

Le tableau 1 compare le procédé selon l'invention par rapport au cas nominal.

[Table 1]

| Gains | Optimisation INV1 | Optimisation INV2 | Optimisation INV3 |
|---|---|---|---|
| AEP (%) | 0,925 | 1,105 | 1,104 |
| DEL (%) | -3,330 | -1,764 | -1,847 |
| Rapport des dommages (%) | 28 | 16 | 17 |

Les deux modes de réalisation de l'invention permettent d'augmenter la puissance générée par la ferme d'éoliennes, tout en réduisant le chargement DEL sur les pales des éoliennes, avec une amélioration du rapport des dommages. Ainsi, le procédé selon l'invention permet d'augmenter la production d'énergie tout en limitant la fatigue des éoliennes.

**Revendications**

1. Procédé de contrôle d'une ferme d'éoliennes, chaque éolienne de ladite ferme d'éoliennes comprenant un actionneur pour modifier un point de fonctionnement de ladite éolienne, notamment l'angle de désalignement (y) de ladite éolienne, l'angle de désalignement (y) étant l'angle formé entre une turbine de ladite éolienne (2) et une direction du vent (U), **caractérisé en ce qu'**on met en oeuvre les étapes suivantes :

   a. On acquiert (ACQ) une distribution de la vitesse et de la direction du vent sur le site de ladite ferme d'éoliennes, ainsi que la vitesse et la direction du vent en temps réel (Vac) ;
   b. On construit un modèle de ferme d'éoliennes (MOD F), ledit modèle de ferme d'éoliennes (MOD F) reliant la vitesse et la direction du vent et ledit point de fonctionnement de chaque éolienne à une puissance générée par ladite ferme d'éoliennes, ledit modèle de ferme d'éoliennes (MOD F) prenant en compte un effet de sillage ;
   c. On construit, pour chaque éolienne, un modèle de chargement (MOD C), ledit modèle de chargement (MOD C) reliant la vitesse et la direction du vent et ledit point de fonctionnement de chaque éolienne au chargement d'au moins un composant de ladite éolienne ;
   d. On détermine, pour chaque éolienne, un point de fonctionnement cible par une méthode d'optimisation (OPT) de l'espérance de la puissance générée par ladite ferme d'éoliennes déterminée par ledit modèle de ferme d'éoliennes (MOD F) pour la distribution de la vitesse et la direction du vent acquise, l'espérance de chargement de chaque éolienne déterminée par ledit modèle de chargement (MOD C) de chaque éolienne pour la distribution de la vitesse et la direction du vent acquise étant un paramètre de la fonction coût de ladite méthode d'optimisation à optimiser, ou une contrainte de ladite méthode d'optimisation, et ladite méthode d'optimisation (OPT) prenant en compte ladite vitesse et ladite direction du vent en temps réel (Vac) ; et
   e. On contrôle (CON) le point de fonctionnement de chaque éolienne en appliquant, au moyen dudit actionneur, le point de fonctionnement cible déterminé.

2. Procédé selon la revendication 1, dans lequel ledit point de fonctionnement est l'angle de désalignement (y), et ladite méthode d'optimisation est contrainte par une plage de variation dudit angle de désalignement (y) de chaque éolienne.

3. Procédé selon l'une des revendications précédentes, dans lequel on acquiert (ACQ) une distribution de la vitesse et de la direction du vent et/ou la vitesse et la direction du vent en temps réel (Vac) par mesure au moyen d'au moins un capteur LiDAR et/ou d'au moins un anémomètre et/ou d'au moins un système de contrôle et d'acquisition de données.

4. Procédé selon l'une des revendications précédentes, dans lequel ladite méthode d'optimisation (OPT) met en oeuvre une somme pondérée de la puissance générée et du chargement.

5. Procédé selon l'une des revendications 1 à 3, dans lequel ladite méthode d'optimisation (OPT) met en oeuvre une optimisation de la puissance générée sous une contrainte liée au chargement, notamment sous contrainte que, pour chaque éolienne, l'espérance du chargement ne soit pas supérieure au chargement nominal global ou sous contrainte que, pour chaque éolienne, l'espérance de chargement ne soit pas supérieure au chargement nominal maximal de toutes les éoliennes confondues.

6. Procédé selon l'une des revendications précédentes, dans lequel ladite méthode d'optimisation (OPT) met en oeuvre une résolution sous forme de Lagrangien, avec une méthode de pénalisation, notamment au moyen de barrières logarithmiques, et éventuellement au moyen de l'algorithme d'Uzawa.

7. Procédé selon l'une des revendications précédentes, dans lequel ledit modèle de chargement (MOD C) détermine un chargement équivalent en dommage, notamment pour les pales ou le mat de l'éolienne.

8. Procédé selon l'une des revendications précédentes, dans lequel on construit ledit modèle de la ferme d'éoliennes au moyen d'un modèle aérodynamique de ladite ferme d'éoliennes et d'un modèle de sillage.

9. Procédé selon l'une des revendications précédentes, dans lequel ledit modèle de chargement (MOD C) est une cartographie préalablement obtenue au moyen d'une modélisation servo-aéro-hydro-élastique.

10. Ferme d'éoliennes, pour laquelle chaque éolienne de ladite ferme d'éoliennes comprend un actionneur pour modifier un point de fonctionnement de l'éolienne, notamment l'angle de désalignement (y) de ladite éolienne, l'angle de désalignement (y) étant l'angle formé entre la turbine de ladite éolienne et une direction du vent, **caractérisée en ce que** ladite ferme d'éoliennes comprend des moyens informatiques pour mettre en oeuvre le procédé de contrôle d'une ferme d'éoliennes selon l'une des revendications précédentes.

Figure 1

Figure 2

Figure 3

Figure 4

Figure 5

<table>
<tr><td colspan="2">Europäisches<br>Patentamt<br>European<br>Patent Office<br>Office européen<br>des brevets</td><td>**RAPPORT DE RECHERCHE EUROPEENNE**</td><td colspan="2">**Numéro de la demande**<br><br>EP 24 16 5586</td></tr>
</table>

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| X | SUN JILI ET AL: "Multi-Objective Offshore Wind Farm Wake Redirection Optimization for Power Maximization and Load Reduction",<br>2022 AMERICAN CONTROL CONFERENCE (ACC), AMERICAN AUTOMATIC CONTROL COUNCIL,<br>8 juin 2022 (2022-06-08), pages 5235-5240, XP034179434,<br>DOI: 10.23919/ACC53348.2022.9867822<br>* le document en entier *<br>----- | 1-10 | INV.<br>F03D7/04<br>F03D7/02 |
| X | CN 112 459 965 A (SHANGHAI ELECTRIC WIND POWER GROUP CO LTD)<br>9 mars 2021 (2021-03-09)<br>* le document en entier *<br>----- | 1-10 | |
| X | KANEV STOYAN ED - LI BAIZHAN ET AL: "Dynamic wake steering and its impact on wind farm power production and yaw actuator duty",<br>RENEWABLE ENERGY, PERGAMON PRESS, OXFORD, GB,<br>vol. 146, 25 juin 2019 (2019-06-25), pages 9-15, XP085904430,<br>ISSN: 0960-1481, DOI: 10.1016/J.RENENE.2019.06.122<br>[extrait le 2019-06-25]<br>* Section 2, pages 10-11; Fig. 2 *<br>----- | 1-10 | DOMAINES TECHNIQUES<br>RECHERCHES (IPC)<br><br>F03D |

Le présent rapport a été établi pour toutes les revendications

| Lieu de la recherche | Date d'achèvement de la recherche | Examinateur |
|---|---|---|
| La Haye | 29 juillet 2024 | Libeaut, Laurent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 16 5586

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-07-2024

| Document brevet cité au rapport de recherche | Date de publication | Membre(s) de la famille de brevet(s) | Date de publication |
|---|---|---|---|
| CN 112459965 A | 09-03-2021 | AUCUN | |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2212772

- US 9201410 B